Europäisches Patentamt

European Patent Office

Office européen des brevets

(11) Publication number: **0 067 775**
A1

# EUROPEAN PATENT APPLICATION

(21) Application number: **82401078.9**

(22) Date of filing: **15.06.82**

(51) Int. Cl.³: **B 60 T 13/24**

(30) Priority: **17.06.81 US 274572**

(43) Date of publication of application:
**22.12.82 Bulletin 82/51**

(84) Designated Contracting States:
**DE FR GB IT**

(71) Applicant: **THE BENDIX CORPORATION**
**Executive Offices Bendix Center**
**Southfield Michigan 48037(US)**

(72) Inventor: **Kytta, Oswald O.**
**1833 N. O'Brien**
**South Bend, IND. 46628(US)**

(72) Inventor: **Bach, Lloyd G.**
**61500 Greentree Drive**
**South Bend, IND. 46614(US)**

(74) Representative: **Huchet, André et al,**
**Service Brevets Bendix 44, rue François 1er**
**F-75008 Paris(FR)**

(54) Fluid pressurizing device, particularly for use in power brake systems.

(57) A fluid pressurizing device consisting of a master cylinder (12) and a brake booster (14), said master cylinder comprising a piston assembly (30) received within a first, cylindrical housing (16), and said brake booster comprising a second housing made of two shells (56, 140) assembled in alignment with the first housing, a hub member and movable wall assembly (70, 106, 110) reciprocable within said second housing, and a control valve assembly (136) controlling a fluid pressure differential across said movable wall;

According to this invention, the first housing (16) has a cylindrical projection (52) which extends through the second housing between a shoulder (54) and a threaded end (68), and a fastener (146) engaged on said threaded end holds the shells (140, 56) of the second housing in compressive engagement against said shoulder;

For use in power brake systems for automotive vehicles.

./...

EP 0 067 775 A1

Croydon Printing Company Ltd.

FIG. 1

The present invention relates to a fluid pressurizing device, and, more particularly, to such a device consisting of a master cylinder and a brake booster for use in power brake systems for automotive vehicles.

In such devices, the master cylinder usually comprises a piston assembly sealingly and reciprocably received within the bore of a first housing of generally cylindrical shape, and the brake booster comprises a second housing made of two shells assembled in substantial alignment with the first housing, a hub member and movable wall assembly sealingly and reciprocably received within said second housing, and an operator-actuated control valve assembly carried by said hub member and movable wall assembly for controlling a fluid pressure differential across the latter as a function of an input force to develop a proportional output thrust and transmit same to the piston assembly of the master cylinder.

In a known construction illustrated in U.S. Patent No. 4,005,639, the first housing is connected to the first shell and the second shell is connected to a / stationary structure such as the firewall of a vehicle.

Later, U.K. Patent Application No. 2,025,549 discloses a structure wherein the reactionary forces that develop during a brake application are carried through bolts that extend from the first housing through the second housing. The movable wall is slidably and sealingly mounted on the bolts. Unfortunately, during some operational conditions, the seals between the movable wall and bolts can create high frictional resistance which reduces the smooth operation of the fluid pressurizing device.

In an effort to reduce the frictional resistance, a sleeve structure such as disclosed in German Patent Appln. No. 29 22 299 was further developed. The sleeve structure provided mounting brackets for the attachment of the brake booster to a master cylinder and the firewall of a vehicle. Unfortunately, with this structure, because of the various types and sizes of master cylinders and under the dash space adjacent the firewall, such mounting brackets are undesirable.

It is, therefore, an essential object of the present invention to provide a fluid pressurizing device of the kind described above, in which the reactionary forces that develop in the master cylinder during a brake application are carried directly into the firewall of the vehicle without affecting the smooth operation of the brake booster nor unduly complicating its mounting.

This object is achieved, according to the invention, and in a fluid pressurizing device of the kind specified above, thanks to the fact that the first housing has a substantially cylindrical projection which extends through the second housing, said projection starting from a first shoulder which is abuttingly engaged by a first shell of the second housing and carrying on its opposite end a fastener which engages a second shell of the second housing to urge same toward the first shell and thus maintain said second housing in an assembled condition.

In a preferred embodiment, the cylindrical projection carries a second shoulder adjacent its end, said fastener urging the second shell against said second shoulder, and the distance between said first and second shoulders being somewhat less than the overall axial length of the second housing to maintain the latter in compression. The projection further includes a cylindrical bore and a pair of slots extending from said first shoulder to substantially one half of the axial length of the second housing, the hub member extends through said slots across said cylindrical bore with peripheral surfaces projecting above the cylindrical projection, and the hub member and movable wall assembly further includes a sleeve that engages said peripheral surfaces, a first diaphragm that has a first bead located between the ends of the first and second shells and a second bead located in a groove on the sleeve, and a second diaphragm that has a third bead connected to said sleeve and a fourth bead located in a groove in the cylindrical projection, said first and second diaphragms, sleeve and cylindrical projection cooperating with the first and second shells to define first and second chambers within the second housing.

As it may be appreciated by those skilled in the art, the direct connection of the master cylinder of the fluid pressurizing device to the firewall of the vehicle will permit the material thickness of the shells of the brake booster to be reduced without increasing axial deformation under load conditions, thus allowing substantial weight savings.

A still further advantage of this invention occurs through the attachment of the brake booster to the cylindrical projection of a master cylinder by a first fastener since the shells that make up the brake booster need not be lanced together since the reactionary forces generated in the master cylinder are directly carried into the firewall through the cylindrical projection.

These and other advantageous features of the invention will become readily apparent from reading the following description of a preferred embodiment, given by way of example only, and with reference to the accompanying drawings, in which:

Figure 1 is a schematic illustration of a fluid pressurizing device made according to the principles of this invention;

Figure 2 is a schematic illustration of the steps of installing a hub member in the cylindrical projection extending from the master cylinder after the front shell of the brake booster has been positioned against a shoulder on the cylindrical projection; and

Figure 3 is a sectional view taken along line 3-3 of Figure 1.

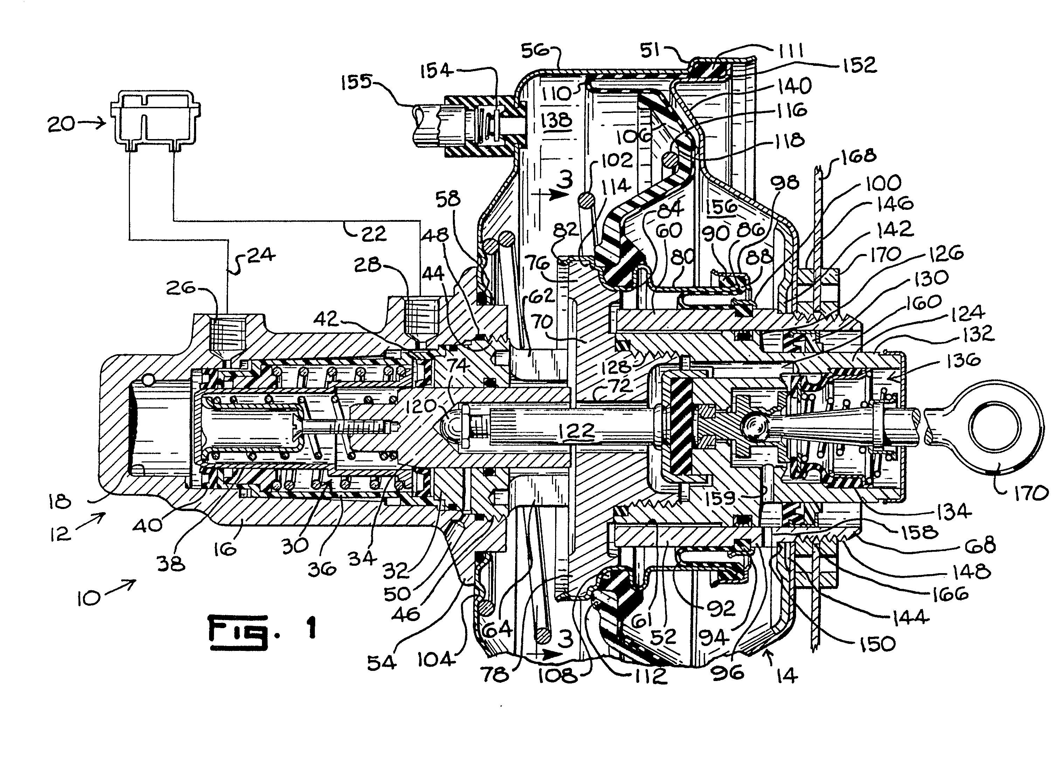

The fluid pressurizing device 10 shown in Figure 1 includes a master cylinder 12 and a brake booster 14.

The master cylinder 12 has a housing 16 with a bore 18. Bore 18 is connected to a reservoir 20 by conduits 22 and 24 attached to compensator ports 26 and 28.

A piston assembly 30, which makes no part of the present invention and may be of the type fully disclosed in U.S. Patent No. 4,249,381, is located in bore 18. A bearing member 32 which surrounds a first piston 34 in the piston assembly 30 engages a sleeve 36. Threads 44 on the periphery of the bearing member 32 are matched with threads 46 on housing 16. A torque is applied to the bearing member 32 positioning the piston assembly 30 in bore 18 such that a stationary seal 40 associated with a second piston 38 is located adjacent compensator port 26 and another stationary seal 42 associated with the first piston 34 is located adjacent compensator port 28. A groove 48 located in housing 16 which is connected to threads 46 has a passage 50 connected to the surrounding environment to prevent fluid from being transmitted from the bore 18 of the master cylinder into the vacuum booster 14.

According to this invention, the master cylinder housing 16 has a cylindrical projection 52 that exends through the housing of the brake booster 14. A rib 54 which extends from housing 16 provides a stop for the front shell 56 of the vacuum brake booster 14.

A seal 58 is located on peripheral surface 60 before the first shell is positioned adjacent shoulder 54.

The cylindrical projection 52 has slots 62 and 64 that extend from adjacent shoulder 54 to approximately the midpoint between the shoulder 54 and end 68.

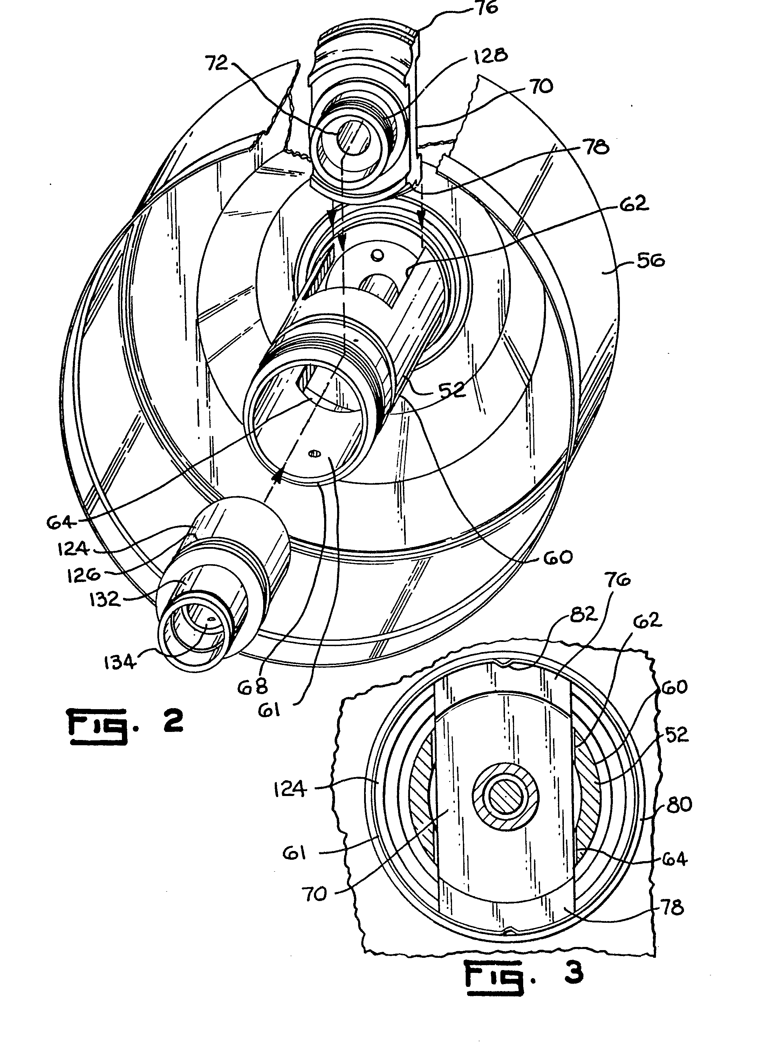

A hub member 70 is inserted into slots 62 and 64 as best shown in Figure 2 such that opening 72 is aligned with socket 74 in piston 34. In this position peripheral surfaces 76 and 78 extend above peripheral surface 60 on the cylindrical projection an equal distance.

Thereafter, an end 82 of a sleeve 80 is snapped over the peripheral surfaces 76 and 78, as shown in Figures 1 and 3. Sleeve 80 which has a groove 84 located therein adjacent end 82 has a rib 86 on end 88. A bead 90 of a diaphragm 92 is affixed to rib 86 and a bead 94 is located in a groove 96 on the cylindrical projection 52.

A first retainer 98 engages bead 90 to hold the same against rib 86 and a second retainer 100 engages bead 94 to hold the same in groove 96.

Thereafter, an end of a return spring 102 is placed on rib 104 on the first shell 56 and a backing plate 106 placed on sleeve 80.

A bead 108 on diaphragm 110 which is snapped into groove 84 urges rib 112 on backing plate 106 against a shoulder 114 on sleeve 80. At the same time end 116 of return spring 102 is located in a recess 118 on backing plate 106 to initially center the hub member 70 in the center of bore 61 of the cylindrical projection 52.

Thereafter, end 120 of a push rod 122 is moved through opening 72 in hub member 70 and into engagement with socket 74 in piston 34.

A cylindrical body 124, as shown in Figure 2; inserted into bore 61 has a guide surface 126 that engages the bore 61 and an end that is mated with threads 128 on the hub member 70. Bearing seal 130 engages a surface 132 on the cylindrical body 124 to provide a two point contact for assuring that the hub member 70 is aligned in the center of bore 61 in cylindrical projection 52.

The cylindrical body 124 has a bore 134 therein which retains a control valve assembly 136 to control the communication between a chamber 138 formed by the first shell 56, diaphragm 110, sleeve 80, diaphragm 92, hub member 70, and the cylindrical body 124.

A second or rear shell 140 placed on the cylindrical projection 52 has a face 142 which holds a seal 144 against the shell 140.

A first fastener or nut 146 engages threads 148 on the end 68 of the cylindrical projection 52. The nut 146 is torqued to bring face 142 into engagement with a shoulder 150 on the cylindrical projection 52. At the same time a flange 152 on rear shell 140 engages a bead 111 on diaphragm 110 to urge the same against shoulder 51 to form a seal between the interior of the second housing and the surrounding environment. The free standing height of the front or first shell 56, thickness of bead 111, and the rear or second sheel is greater than the distance between shoulders 54 and 150 on the cylindrical projection 52. Therefore, when the nut 146 moves the face 142 into engagement with shoulder 150, the front and rear shells 56 and 140 are placed in compression.

Thereafter, this assembly is connected to a source of vacuum through conduit 154 to evacuate air from the brake booster 14.

With the valve assembly 136 in the release position as shown in Figure 1, air from chamber 156 formed by diaphragm 110, sleeve 80, diaphragm 92, cylindrical projection 52 and rear shell 140, flows through passage 158, bore 134, and passage 160 into chamber 138. With vacuum in chambers 138 and 156, a pressure differential is created with the air in the surrounding environment. Since bead 111 is only held between shoulder 51 and flange 152 by the compressive force of the fastener 146 acting on the second shell 140, the level of the vacuum is measured after a period of time to determine if a leak is present at the seals 58, 111 and 144. If any of the vacuum level is maintained for a predetermined time period, the fluid pressure assembly 10 is accepted for installation on a vehicle.

The vehicle manufacturer thereafter locates the cylindrical projection 52 in an opening 166 in a firewall 168.

The compensator ports 26 and 28 are aligned on the top of bore 18 and a second fastener or nut 170 is placed on threads 148.

This second nut 170 is torqued against the firewall 168 and the fluid pressurizing device 10 is installed in the vehicle.

In the rest position, after the installation on the firewall 168, return spring 102 acts on backing plate 106 to hold diaphragm 110 against the second shell 140. Since sleeve 80 is attached to hub member 70 the cylindrical body 124 is also moved to the rest position.

When the vehicle is in operation, vacuum is connected to the brake booster 14 through conduit 155 connected to check valve 154.

When the operator desires to effect a brake application, an input force is applied to push rod 170 to activate the control valve assembly 136 and interrupt vacuum communication to bore 134 through passage 160 and initiate the communication of air to chamber 156 by way of bore 134, and passages 158 and 159. With air in chamber 156, a pressure differential is created across diaphragms 92 and 110 with the vacuum in chamber 138. This pressure differential acts on backing plate 106 and sleeve 80 to develop a force that is carried into hub member 70 for distribution into push rod 122.

The push rod 122 acts on the piston assembly 30 to pressurize the fluid in master cylinder 12 and produce a fluid output that is transmitted to the wheel brakes to institute a brake application.

The reaction to the development of the fluid output in the master cylinder 12 is carried through the cylindrical projection 52 into the firewall 168. The pressure differential acts on diaphragm 110 and adjacent bead 111 retains the vacuum seal in chamber 138 while diaphragm 92 is urged toward the peripheral surface 60 of the cylindrical projection to retain the vacuum seal at this connection. The tensile strenth of shell 140 is such that when air is present in chamber 156, flange 152 still holds bead 111 against shoulder 51.

When the brake application has been achieved, the input force on push rod 170 is removed and return springs in valve assembly 136 terminate the flow path for air to chamber 156 to allow vacuum present in chamber 138 to evacuate air therefrom and allow return spring 102 to move the movable wall or diaphragms 92 and 110 to the rest position as shown in Figure 1.

CLAIMS

1. A fluid pressurizing device consisting of a master-cylinder (12) and a brake booster (14), said master cylinder comprising a piston assembly (30) sealingly and reciprocably received within the bore (18) of a first housing (16) of generally cylindrical shape, and said brake booster comprising a second housing made of two shells (56,140) assembled in substantial alignment with the first housing, a hub member and movable wall assembly (70,106,110) sealingly and reciprocably received within said second housing, and an operator-actuated control valve assembly (136) carried by said hub member and movable wall assembly for controlling a fluid pressure differential across the latter as a function of an input force to develop a proportional output thrust and transmit same to the piston assembly of the master cylinder, characterized in that the first housing (16) has a substantially cylindrical projection (52) which extends through the second housing, said projection starting from a first shoulder (54) which is abuttingly engaged by a first shell (56) of the second housing and carrying on its opposite end (68) a fastener (146) which engages a second shell (140) of the second housing to urge same toward the first shell and thus maintain said second housing in an assembled condition.

2. A fluid pressurizing device according to Claim 1, characterized in that said cylindrical projection (52) carries a second shoulder (150) adjacent its end (68), said fastener (146) urging the second shell (140) against said second shoulder, and the distance between said first and second shoulders being somewhat less than the overall axial length of the second housing to maintain the latter in compression.

3. A fluid pressurizing device according to Claim 1 or 2, characterized in that said cylindrical projection (52) includes a cylindrical bore (61) and a pair of slots (62,64) extending from said first shoulder (54) to substantially one half of the axial length of the second housing, in that the hub member (70) extends through said slots across said cylindrical bore with peripheral surfaces (76,78) projecting above the cylindrical projection (52), and in that the hub member and movable wall assembly further includes a sleeve (80) that engages said peripheral surfaces, a first diaphragm (110) that has a first bead located between the ends of the first and second shells (56,140) and a second bead (108) located in a groove (84) on the sleeve, and a second diaphragm (92) that has a third bead (90) connected to said sleeve and a fourth bead (94) located in a groove (96) in the cylindrical projection, said first and second diaphragms, sleeve and cylindrical projection cooperating with the first and second shells to define first and second chambers within the second housing.

4. A fluid pressurizing device according to Claim 3, characterized in that the control valve assembly (136) includes a cylindrical body (124) having a guide surface that slidably engages the bore (61) of the cylindrical projection (52), and in that said cylindrical body is secured to the hub member (70) to hold the latter in the cylindrical bore (61).

5. A fluid pressurizing device according to any of Claims 1 to 4, characterized in that the fastener includes a first nut (146) that mates with threads (148) on said cylindrical projection to position said second shell against said second shoulder (150), and a second nut (170) that mates with the threads on the cylindrical projection and engages a mounting surface (168) for positioning the fluid pressurizing device in a fixed position.

Fig. 1

Fig. 2

Fig. 3

European Patent Office

**EUROPEAN SEARCH REPORT**

Application number

EP 82 40 1078

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P | FR-A-2 487 762 (BENDIBERICA) *The whole document; figures 1,3* & ES - A - 494 699 | 1,3,4 | B 60 T 13/24 |
| P | GB-A-2 079 390 (TEVES) *Page 2, line 90 to page 3, line 97; figure 1* & FR - A - 2 486 004 & DE - A - 3 025 314 | 1,3,4 | |
| P | GB-A-2 072 777 (TEVES) *Page 2, lines 27 to 39; figure 1* & FR - A - 2 482 028 & DE - A - 3 012 454 | 1 | |
| A,D | US-A-4 005 639 (WELSH) | 1 | |
| A,D | GB-A-2 025 549 (TEVES) | 1 | TECHNICAL FIELDS SEARCHED (Int. Cl. ³) |
| A,D | DE-A-2 922 299 (TOKICO) | 1 | B 60 T 13/24 |

The present search report has been drawn up for all claims

| Place of search | Date of completion of the search | Examiner |
|---|---|---|
| THE HAGUE | 05-10-1982 | BRAEMS C.G.I. |